# EUROPÄISCHE PATENTSCHRIFT

(11) **EP 1 243 013 B1**
(45) Veröffentlichungstag und Bekanntmachung des Hinweises auf die Patenterteilung: **10.01.2007**
(21) Anmeldenummer: 00977561.0
(22) Anmeldetag: 23.11.2000
(51) Int. Cl.: H01H 83/20

(54) **SIMULATIONSSCHALTER**
SIMULATION SWITCH
COMMUTATEUR DE SIMULATION

(30) Priorität: 16.12.1999 DE 19960755
(43) Veröffentlichungstag der Anmeldung: 25.09.2002
(73) Patentinhaber: Ellenberger & Poensgen GmbH, D-90518 Altdorf (DE)
(72) Erfinder: MECKLER, Peter, 91224 Hohenstadt/Pommelsbrunn (DE); SCHNEIDER, Ewald, 91238 Offenhausen (DE); ABRAHAM, Gerd, 90559 Burgthann (DE)
(74) Vertreter: Walkenhorst, Andreas
(86) Internationale Anmeldenummer: PCT/EP2000/011668
(87) Internationale Veröffentlichungsnummer: WO 2001/045129

(56) Entgegenhaltungen:
- DE-A- 1 802 115
- DE-U- 8 904 064
- DE-U- 9 208 010
- FR-A- 2 512 584
- US-A- 3 156 849
- US-A- 5 381 121

## Beschreibung

Die Erfindung bezieht sich auf einen Simulationsschalter zum Einbau in einen Flugsimulator und Simulieren eines mittels eines Betätigungselementes manuell betätigbaren Überstromschutzschalters.

Zur Schulung von Piloten werden Flugsimulatoren eingesetzt, da zur Beherrschung der Komplexität moderner Cockpits zunächst ein Trockentraining erforderlich ist, bevor am realen Flugzeug geübt werden kann. In einem solchen Flugsimulator müssen dabei alle im realen Cockpit enthaltenen Bedien- und Anzeigeelemente zumindest an der Schnittstelle zum Piloten in identischer Ausführung vorhanden sein, um einen möglichst wirklichkeitsgetreuen Eindruck zu vermitteln.

So müssen auch die im Flugsimulator verwendeten Simulationsschalter, mit denen die zur Absicherung der Stromkreise im realen Flugzeug vorhandenen Schutzschalter, wie sie beispielsweise aus der DE-AS 1 191 030 oder den DE-GM 8 904 064 und 8 904 065 bekannt sind, simuliert werden, in identischer Ausführung vorhanden sein. Dabei darf sich auch das mechanische Schaltgefühl beim manuellen Betätigen des Simulationsschalters nicht von dem Schaltgefühl beim manuellen Betätigen eines im realen Flugzeug vorhandenen Schutzschalters unterscheiden. Aus diesem Grund werden in den Flugsimulator die selben Schutzschalter eingebaut, die auch im realen Flugzeug Verwendung finden. Da die im Flugsimulator verwendeten Schutzschalter jedoch keine realen Stromkreise schützen müssen, werden thermische Schutzschalter verwendet, deren Nennstrom möglichst niedrig ist (typisch 200 bis 500 mA), um ein gesteuertes Auslösen dieser Schutzschalter mit möglichst niedrigen Strömen und damit möglichst niedriger Verlustleistung herbeiführen zu können. Dennoch liegen die notwendigen Auslöseströme im Amperebereich. Daraus ergeben sich relativ hohe Energiewerte (~i²t) zum Ansteuern der Simulationsschalter, so dass eine entsprechende Dimensionierung des Versorgungsnetzes des Flugsimulators erforderlich ist. Außerdem liegen aufgrund der thermischen Auslösung die Auslösezeiten im Sekundenbereich.. Dies muß durch entsprechend lange Ansteuerzeiten in der Software für den Flugsimulator berücksichtigt werden, um für jeden möglichen Betriebs- bzw. Störfall die realen Auslösezeiten zu simulieren.

Der Erfindung liegt nun die Aufgabe zugrunde, einen Simulationsschalter zum Einbau in einem Flugsimulator und Simulieren eines mittels eines Betätigungselementes manuell betätigbaren Überstromschutzschalters anzugeben, bei dem die vorstehend genannten Nachteile weitgehend vermieden sind.

Die genannte Aufgabe wird gemäß der Erfindung gelöst mit einem Simulationsschalter mit den Merkmalen des Patentanspruches 1. Der erfindungsgemäße Simulationsschalter enthält eine mit der Schaltmechanik des Überstromschutzschalters baugleiche Schaltmechanik zum Öffnen und Schließen eines Schaltkontaktes sowie eine elektromagnetische Auslöseeinrichtung zum Auslösen des geschlossenen Schaltkontaktes mittels eines Steuerstromes. Durch diese Maßnahme wird einerseits das mechanische Schaltgefühl gegenüber einem in einem realen Bordnetz verwendeten Überstromschutzschalter nicht verändert. Da die Auslösung des Simulationsschalters, das heißt das Öffnen der Schaltkontakte und das Entriegeln des Betätigungselementes mit einer elektromagnetischen Auslöseeinrichtung erfolgt, genügen andererseits kleine Steuerströme, um ein Ansprechen des Simulationsschalters zu ermöglichen. Durch die Verwendung einer elektromagnetischen Auslöseeinrichtung kann außerdem die Auslösezeit gegenüber thermisch ausgelösten Simulationsschaltern deutlich verringert werden. So liegt der zum Auslösen erforderliche Steuerstrom bei einer typischen Steuerspannung von 28 V in der Größenordnung von etwa 100 mA und die benötigte Ansteuerzeit ist kleiner als 10 ms. Die benötigte Ansteuerenergie sinkt somit gegenüber der bei den bisher üblichen Simulationsschaltern mit thermischer Auslösung erforderlichen Ansteuer-energie um den Faktor 500 bis 1000.

In einer vorteilhaften Ausführungsform ist die elektromagnetische Auslöseeinrichtung elektrisch in Reihe mit der durch die Schaltkontakte gebildeten Schaltstrecke geschaltet. Durch diese Maßnahme schaltet sich der für das Ansteuern der elektromagnetischen Auslöseeinrichtung erforderliche Steuerstrom beim Öffnen der Schaltkontakte von selbst ab, so dass eine Überlastung der Auslöseeinrichtung vermieden ist.

Insbesondere enthält die elektromagnetische Auslöseeinrichtung ein Relais mit einem Zuganker zum Entriegeln einer in Schließstellung wirksamen Verklinkung zumindest eines der Schaltkontakte, wobei vorzugsweise die Spule des Relais mit der Schaltstrecke in Serie geschaltet ist.

In einer weiteren bevorzugten Ausgestaltung der Erfindung ist eine Schutzdiode parallel oder in Serie zur Wicklung der Spule des Relais geschaltet. Dadurch werden schädliche Spannungseinwirkungen auf die Steuerelektronik beim Abschalten der Spuleninduktivität begrenzt.

In einer weiteren bevorzugten Ausgestaltung der Erfindung enthält der Simulationsschalter zumindest einen elektrischen gehäuseexternen Anschlusskontakt, der mit einem innenliegenden Kontaktteil in das fertig montierte Gehäuse einführbar und dort im eingeführten Zustand fixiert ist und über das innenliegende Kontaktteil in elektrischem Kontakt mit einem gehäuseinternen Anschlusskontakt steht. Durch diese Maßnahme können unterschiedliche Anschlussvarianten, z. B. Steck-Anschluss, Löt-Anschluss, Schraub-Anschluss oder Wire-Wrap-Anschluss, bei nur einem einzigen Schaltertyp bereitgestellt werden. Der Simulationsschalter kann dann ohne Anschlusskontakte ausgeliefert werden. Die unterschiedlichen Anschlussvarianten können dann nachträglich vom Kunden entsprechend seinem konkreten Bedarf in das fertigmontierte Gehäuse eingesteckt werden. Eine solche Endmontage beim Kunden ist sowohl fertigungstechnisch als auch hinsichtlich der Lagerhaltung von Vorteil.

Vorzugsweise ist der elektrische Kontakt zwischen dem gehäuseinternen Anschlusskontakt und dem gehäuseexternen Anschlusskontakt von der mechanischen Fixierung des gehäuseexternen Anschlusskontaktes unabhängig. Durch diese Maßnahme führt eine mechanische Belastung des gehäuseexternen Anschlusskontaktes nicht zu einer Beeinträchtigung des elektrischen Kontaktes.

Insbesondere wird der gehäuseinterne Anschlusskontakt durch eine im Gehäuse gelagerte Kontaktfeder gebildet, wobei vorzugsweise die Kontaktkraft quer zur Einführrichtung wirkt. Dadurch ist sichergestellt, dass eine Belastung des gehäuseexternen Anschlusskontaktes nicht zu einer unzulässigen Verminderung der Kontaktkraft führt.

Vorzugsweise ist zur mechanischen Fixierung des gehäuseexternen Anschlusskontaktes eine Rastverbindung vorgesehen. Dies ermöglicht eine besonders einfache Montage durch den Abnehmer.

In einer weiteren besonders bevorzugten Ausgestaltung der Erfindung enthält der Simulationsschalter zusätzlich zur elektromagnetischen Auslöseeinrichtung eine thermische Überstromauslöseeinrichtung zum Auslösen des geschlossenen Schaltkontaktes mit einem über ihn fließenden Überstrom. Durch diese Maßnahme kann der Simulationsschalter sowohl als konventioneller Überstromschutzschalter als auch als Simulationsschalter eingesetzt werden. Ein um dieses Funktionsmerkmal erweiterter Simulationsschalter eröffnet darüber hinaus die Möglichkeit der Fernauslösung mit einem Steuerstrom, der ein Öffnen des Schalters noch vor Erreichen des zur Auslösung normalerweise erforderlichen Überstromes ermöglicht. Ein solcher Simulationsschalter kann dann vorteilhaft auch in realen Flugzeugen eingesetzt werden, in denen mit Hilfe zusätzlicher Fehlerdiagnose-Einrichtungen ein fehlerhafter Zustand noch vor Erreichen des Überstromes detektiert wird. Mit Hilfe einer beispielsweise mikroprozessorgesteuerten Steuereinrichtung ist dann eine Abschaltung möglich, noch bevor der kritische Überstrom erreicht wird. Ein solcher Schutzschalter ist vor allen Dingen für die Verwendung in Einrichtungen von Vorteil, die eine Fehleranalyse und ein Erkennen eines fehlerhaften Zustandes noch vor dem Erreichen kritischer und das System belastender Zustände ermöglichen.

Vorzugsweise sind hierzu den Schaltkontakten Anschlusskontakte zugeordnet, die elektrisch von den Anschlusskontakten der elektromagnetischen Auslöseeinrichtung getrennt sind. Ein in dieser Weise gestalteter Überstromschutzschalter hat dann vier Anschlusskontakte und ermöglicht zwei voneinander unabhängige Auslösemechanismen, die u.U. auch auf unterschiedliche Fehler ansprechen.

Zur weiteren Erläuterung der Erfindung wird auf die Ausführungsbeispiele der Zeichnung verwiesen. Es zeigen:
- Fig. 1: einen Simulationsschalter gemäß der Erfindung in einer die wesentlichen Funktionen erläuternden Prinzipdarstellung,
- Fig. 2: einen Simulationsschalter in einer perspektivischen Gesamtdarstellung,
- Fig. 3: den Simulationsschalter gemäß Fig. 2 in einem Längsschnitt mit geschlossenen Schaltkontakten,
- Fig.4: den Simulationsschalter gemäß Fig. 3 im ausgelösten Zustand,
- Fig. 5: eine Explosionsdarstellung der elektromagnetischen Auslöseeinrichtung des Simulationsschalters,
- Fig. 6 und 7: eine altemative Ausführungsform mit steckbaren Anschlusskontakten im geschlossenen und geöffneten Zustand und
- Fig. 8: eine Explosionsdarstellung der Auslöseeinrichtung dieser alternativen Ausführungsform,
- Fig. 9: die Verrastung der steckbaren Anschlusskontakte im Gehäuse des Simulationsschalters,
- Fig. 10: einen Simulationsschalter mit steckbaren Anschlusskontakten, bei dem die Schutzdiode in Serie zum Relais der elektromagnetischen Auslöseeinrichtung geschaltet ist,
- Fig. 11: eine weitere Ausführungsform eines Simulationsschalters gemäß der Erfindung mit seitlich angeordneter elektromagnetischer Auslöseeinrichtung und
- Fig. 12: einen Simulationsschalter, bei dem die Schaltkontakte sowohl mit einem Überstrom als auch mit Hilfe der elektromagnetischen Auslöseeinrichtung ausgelöst werden können.

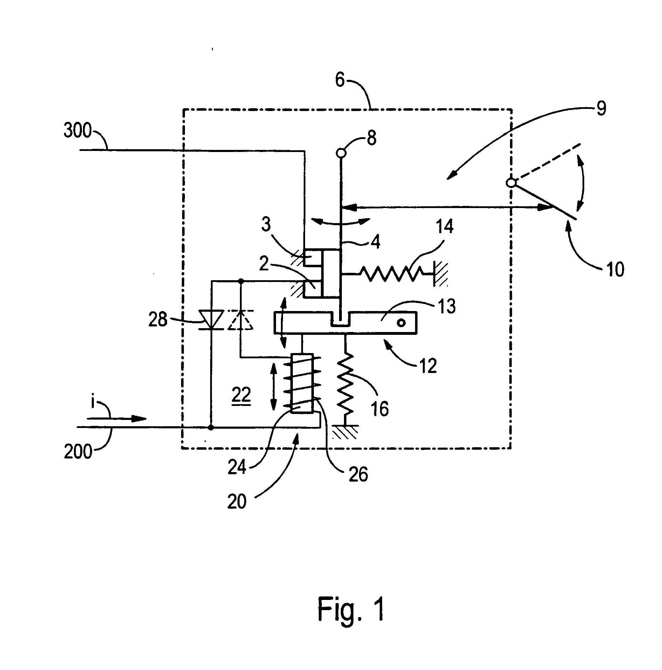

Gemäß Fig. 1 umfaßt ein Simulationsschalter gemäß der Erfindung einen ersten und zweiten feststehenden Schaltkontakt 2 bzw. 3 und einen beweglichen Schaltkontakt (Kontaktbrücke) 4. Der bewegliche Schaltkontakt 4 ist in einem in der Figur nur symbolisch dargestellten Gehäuse 6 schwenkbar um eine Schwenkachse 8 gelagert und über eine Schaltmechanik (Schaltschloß) 9 mit einem Betätigungselement 10, im Ausführungsbeispiel ein Kippschalter, mechanisch gekoppelt.

Der bewegliche Schaltkontakt 4 ist im Ausführungsbeispiel als Kontaktbrücke ausgestaltet, die die feststehenden Schaltkontakte 2,3 überbrückt. Die feststehenden Schaltkontakte 2,3 sind elektrisch mit gehäuseexternen Anschlusskontakten 200,300 verbunden. Anstelle der Verwendung einer Kontaktbrücke als beweglichen Schaltkontakt 4 ist es grundsätzlich auch möglich, einen oder beide der unmittelbar mit den Anschlusskontakten 200,300 in Verbindung stehenden Schaltkontakte beweglich zu lagern.

Der bewegliche Schaltkontakt 4 steht in Wirkverbindung mit einer Verklinkung 12, in der Prinzipdarstellung beispielhaft als schwenkbarer Riegel 13 dargestellt, die die die Schaltkontakte 2,3,4 entgegen der Wirkung einer ersten Feder 14, in der Prinzipdarstellung gemäß der Figur symbolisch als Zugfeder dargestellt, in geschlossenem Zustand hält. Der Riegel 13 verrastet hierzu unter Wirkung einer zweiten Feder 16, beispielsweise dargestellt als Druckfeder, mit dem beweglichen Schaltkontakt 4, wenn dieser mit den feststehenden Schaltkontakten 2,3 in Kontakt steht und die Schaltstrecke zwischen diesen Schaltkontakten 2,3 überbrückt.

Der Riegel 13 steht seinerseits in Wirkverbindung mit einer elektromagnetischen Auslöseeinrichtung 20, mit der dieser beispielsweise gegen die Wirkung der zweiten Feder 16 geschwenkt werden kann, so dass die Verklinkung 12 des beweglichen Schaltkontaktes 4 entriegelt wird und dieser unter der Wirkung der von der Zugfeder 14 ausgeübten Federkraft öffnet oder auslöst und zugleich ein Auslösen des Betätigungselementes 10 (gestrichelt dargestellte Position) herbeiführt.

Die elektromagnetische Auslöseeinrichtung 20 umfaßt hierzu ein Relais 22 dessen Zuganker 24 kraftschlüssig an den Riegel 13 gekoppelt ist. Wird die Spule 26 des Relais 22 mit einem Steuerstrom i beaufschlagt, so wird der Zuganker 22 angezogen, die Verriegelung 12 zwischen dem beweglichen Schaltkontakt 4 und dem Riegel 13 entriegelt und der Kontakt geöffnet. Die Spule 26 ist dabei elektrisch in Serie zu der von den Schaltkontakten 2,3,4 gebildeten Schaltstrecke geschaltet, so dass sich der Steuerkreis für das Relais 22 beim Öffnen des Kontaktes selbsttätig unterbricht. Parallel oder in Serie (gestrichelt dargestellt) zur Spule 26 ist eine Schutzdiode 28 geschaltet. Dadurch wird das Relais 22 gepolt, d. h. es kann nur in einer Stromrichtung betrieben werden.

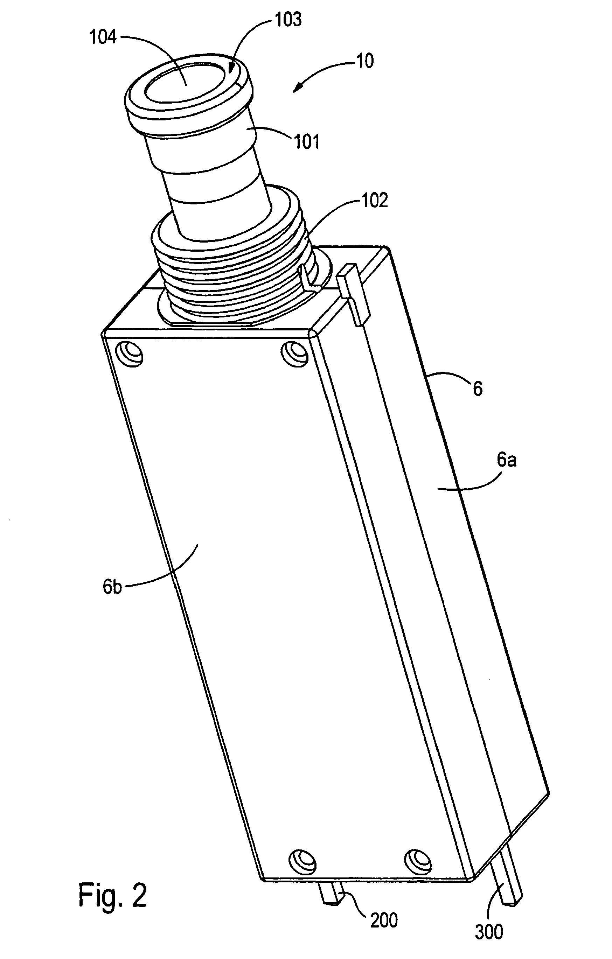

Gemäß Fig. 2 ist bei einem Simulationsschalter gemäß der Erfindung in einer praktischen Ausführungsform als Betätigungselement 10 ein Druckknopf 101 vorgesehen.

Der Druckknopf 101 ist in einer mit einem Außengewinde versehenen Führungshülse 102 geführt, die zugleich zur Befestigung des Simulationsschalters an einer Schalttafel dient. Der Druckknopf 101 ist an seiner Stirnfläche 103 mit einer kreisscheibenförmigen Vertiefung 104 versehen, die als Beschriftungsfläche zur Aufnahme eines Klebeetiketts dient, auf dem eine gewünschte, zu simulierende Nennstromstärke aufgebracht ist.

Das Gehäuse 6 besteht vorzugsweise aus zwei, aus thermoplastischem Kunststoff gefertigten Gehäusehälften 6a und 6b. Aus dem Gehäuse 6 ragen die gehäuseexternen Anschlusskontakte 200,300, von denen einer an die Spule und der andere an einen der Schaltkontakte angeschlossen ist und die im Ausführungsbeispiel als Wire-Wrap-Anschlüsse ausgebildet sind.

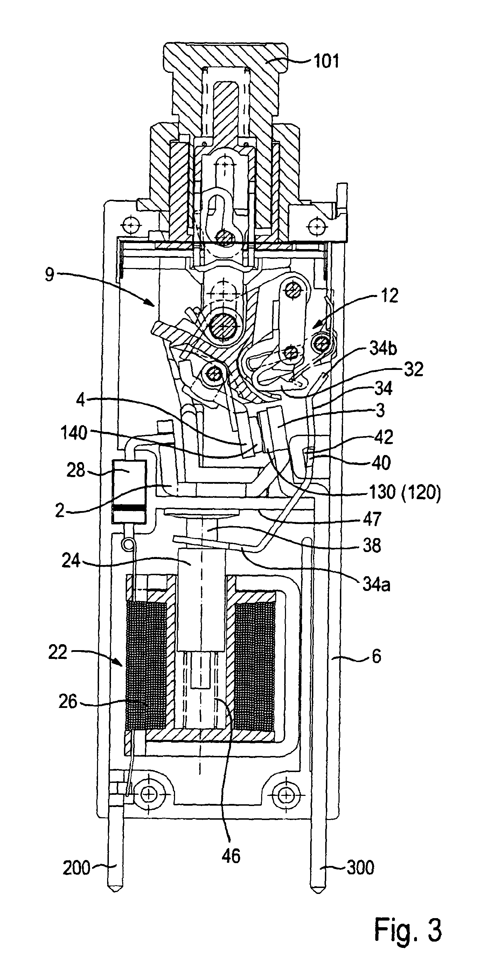

Fig. 3 zeigt den Simulationsschalter im geschlossenen Zustand, d. h. der Druckknopf 101 ist eingedrückt und der bewegliche Schaltkontakt 4 ist mit seinem Kontaktstück 140 gegen die feststehenden Schaltkontakte 2,3 gedrückt, wobei in der Figur das Kontaktstück 120 des annähernd U-förmigen ersten feststehenden Schaltkontaktes 2 vom Kontaktstück 130 des zweiten feststehenden Schaltkontaktes 3 verdeckt ist.

Die im Ausführungsbeispiel dargestellte Schaltmechanik 9 ist baugleich mit der Schaltmechanik des in den deutschen Gebrauchsmustern 89 04 065 und 89 04 064 offenbarten Überstromschutzschalters und ist dort hinsichtlich Aufbau und Funktionsweise ausführlich erläutert.

Als Verriegelung 12 für den beweglichen Schaltkontakt 4 dient ein Verrastungshebel 32, der den beweglichen Schaltkontakt 4 in Schließposition hält. Dem Verrastungshebel 32 ist ein Auslösehebel 34 zugeordnet, der bei Betätigung ein Schwenken des Verrastungshebels 32 und ein Öffnen der Schaltkontakte 2,3,4 und somit der zwischen den Schaltkontakten befindlichen Schaltstrecke bewirkt.

Zum Betätigen des Auslösehebels 34 ist anders als bei dem in den vorstehend genannten Gebrauchsmustern offenbarten Überstromschutzschalter anstelle eines Bimetalls der Zuganker 24 des Relais 22 vorgesehen. Der Auslösehebel 34 weist hierzu ein vom Verrastungshebel 32 abgewandtes gabelförmiges freies Ende 34a auf, das in eine ringförmige Aussparung 33 am im wesentlichen zylindrischen Zuganker 24 eingreift. Der Auslösehebel 34 ist mit Hilfe von seitlichen Lagerzapfen 40 schwenkbar in dazu korrespondierenden Lageraugen 42 des Gehäuses 6 gelagert.

In der Figur ist außerdem zu erkennen, dass die Wicklung der Spule 26 über die Schutzdiode 28 an den U-förmigen ersten feststehenden Schaltkontakt 2 angeschlossen und damit in Serie zur Schaltstrecke geschaltet ist. Im eingeschalteten Zustand befindet sich nun der Zuganker 24 unter dem Einfluß einer Druckfeder 46 in Ausgangsposition und in Anschlag an einer gehäuseintern fixierten Anschlagfläche 47. In dieser Ausgangsposition greift der Auslösehebel 34 nicht in den Verrastungshebel 32 ein. In dieser Stellung kann ein geringer Strom im Milliamperebereich zwischen den Anschlusskontakten 200 und 300 fließen, der zur Überprüfung des Schaltzustands (Kontakt geschlossen oder offen) durch die Steuerelektronik dient und nicht zur Auslösung ausreicht.

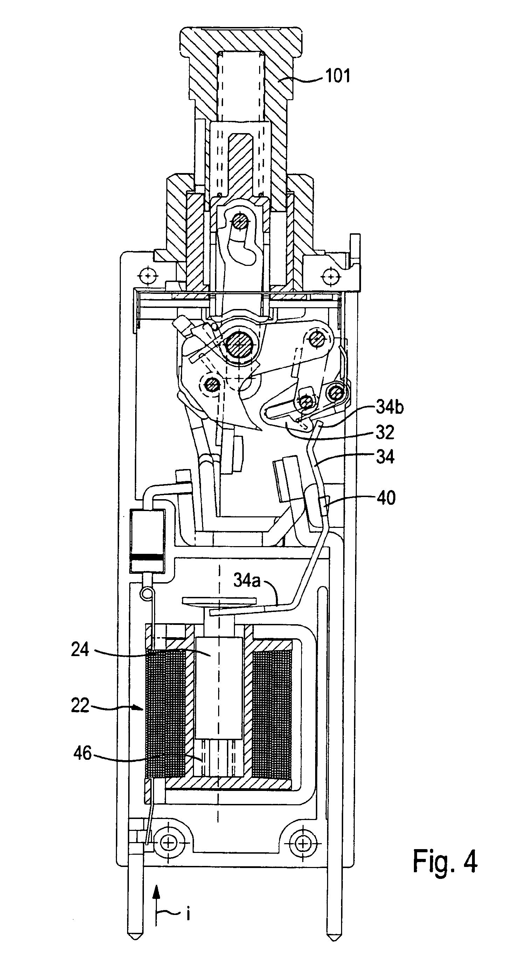

Fließt nun ein hinreichend großer Steuerstrom i durch die Wicklung der Spule 26, so wird gemäß Fig. 4 der Zuganker 24 gegen die Wirkung der Druckfeder 46 in das Innere der Spule 26 gezogen und bewirkt ein Schwenken des Auslösehebels 34 um die von den Lagerzapfen 40 senkrecht zur Zeichenebene festgelegte Schwenkachse. Mit seinem dem Verrastungshebel 32 zugeordneten freien Ende 34b bewirkt der Auslösehebel 34 ein Schwenken des Verrastungshebels 32 und entriegelt in der in den Gebrauchsmustern beschriebenen Weise das Schaltschloß der Schaltmechanik. Dadurch bewegt sich der bewegliche Schaltkontakt 4 von den feststehenden Schaltkontakten 2,3 weg und der Druckknopf 101 springt nach außen.

Der in Fig. 4 dargestellte Zustand gibt dabei nicht den Endzustand, sondern einen Zustand während des Öffnens der Kontakte wieder. Nachdem nämlich die Schaltkontakte 2,3,4 geöffnet sind, wird das Relais 22 stromlos, und der Zuganker 24 kehrt in seine Ausgangsposition zurück, so dass der Auslösehebel 34 ebenfalls wieder in seine Fig. 3 dargestellte Ausgangsposition zurückschwenkt.

Bei der in den Gebrauchsmustern näher erläuterten Schaltmechanik handelt es sich um eine Freiauslösung, d. h. die durch den beweglichen Schaltkontakt 4 hergestellte Verbindung zwischen den feststehenden Schaltkontakten 2,3 wird auch dann unterbrochen, wenn der Druckknopf 101 niedergedrückt gehalten wird.

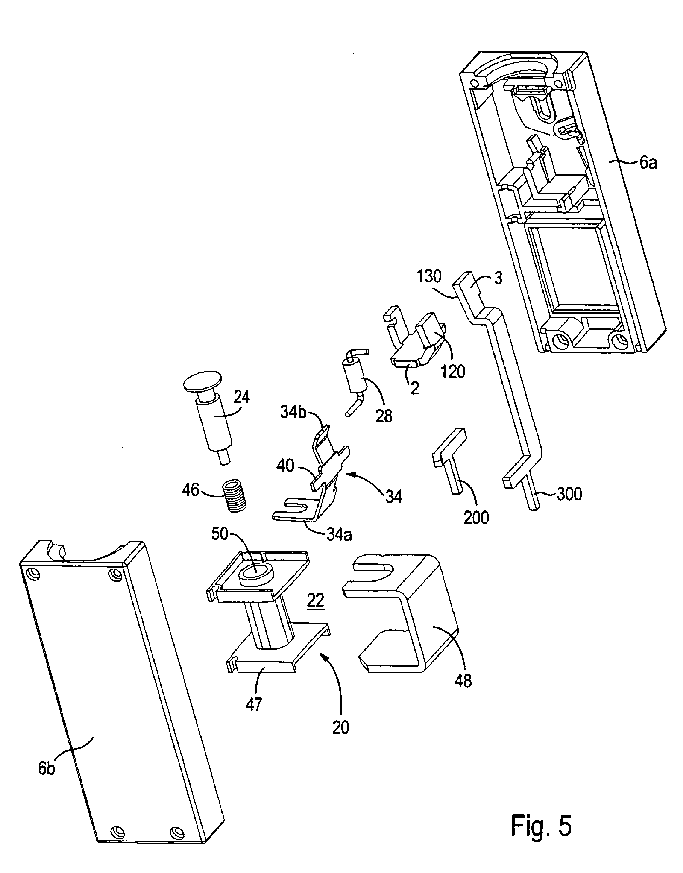

In Fig. 5 sind die Funktionsteile der elektromagnetischen Auslöseeinrichtung 20 in Explosionsdarstellung dargestellt. Das Relais 22 umfaßt einen Spulenträger 47, auf den ein U-förmiges Magnetjoch 48 aufgeschoben ist. Der an seinem freien Ende 34a gabelförmig gestaltete Auslösehebel 34 besteht aus einem Stanzbiegeteil, an dem die Lagerzapfen 40 einstückig angeformt sind. In eine hohlzylindrische Führungsbohrung 50 in Längsrichtung des Spulenträgers 47 ist die Druckfeder 46 eingeführt, auf die der Zuganker 24 gelagert ist. In der Figur ist außerdem zu erkennen, dass der zweite feststehende Schaltkontakt 3 und der ihm zugeordnete gehäuseexterne Anschlusskontakt 300 einstückig sind. Ebenso ist die U-förmige Gestalt des ersten feststehenden Schaltkontaktes 2 zu erkennen, der an die Schutzdiode 28 angeschlossen ist und mit seinem Kontaktstück 120 im montierten Zustand in einer Ebene mit dem Kontaktstück 130 des zweiten feststehenden Schaltkontaktes 3 angeordnet ist.

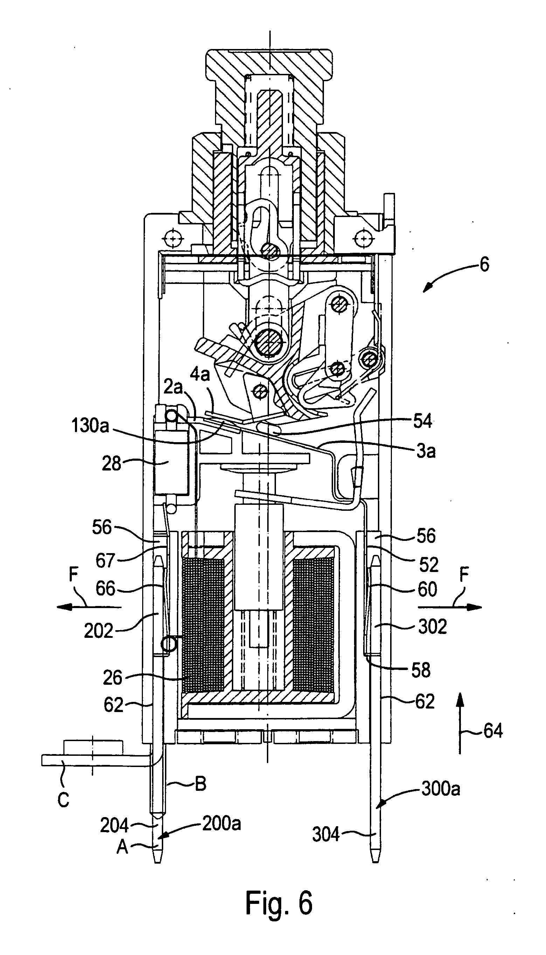

In der alternativen Ausgestaltung gemäß Fig. 6 ist ein feststehender Schaltkontakt 3a vorgesehen, der mit seinen dem Kontaktstück 130a abgewandten freien Ende 52 in einer Ausnehmung 56 innerhalb des Gehäuses 6 gelagert ist. Der Schaltkontakt 3a ist im Gehäuse 6 zwischen einem am Gehäuse 6 angeformten Stützzapfen 54 der Innenwandung der Ausnehmung 56 verspannt. Hierzu ist er an seinem freien Ende 52 mit einem L-förmig abgewinkelten Stützfuß 58 versehen, der sich in der Ausnehmung 56 abstützt. Der feststehende Schaltkontakt 3a weist an seinem freien Ende 52 im Bereich der Ausnehmung 56 ein überstehendes Federelement 60 auf, im Beispiel eine Biegefeder, das in die Ausnehmung 56 hineinragt und bei fixiertem Schaltkontakt 2a innerhalb der Ausnehmung 56 gegen die Federkraft beweglich ist.

In die Ausnehmung 56 mündet ein Einführkanal 62, in den ein gehäuseexterner Anschlusskontakt 300a mit seinem innenliegenden Kontaktteil 302 eingeführt ist, gegen den das Federelement 60 drückt und auf diese Weise eine elektrische Kontaktierung zwischen dem gehäuseexternen Anschlusskontakt 300a und dem feststehenden Schaltkontakt 3a herbeiführt. Die Kontaktkraft F zwischen dem Federelement 60 und dem innenliegenden Kontaktteil 302 des Anschlusskontaktes 300a wirkt parallel zur Zeichenebene und senkrecht zur Einsteckrichtung 64 bzw. zur Längsrichtung des Einführkanals 62. Eine mechanische Belastung des außenliegenden Kontaktteiles 304 des Anschlusskontaktes 300a in dieser Einsteck- oder Einführrichtung 64 ist somit ohne Einfluß auf die Kontaktierung, da die Kontaktkraft F quer zur Einsteckrichtung wirkt. Da das innenliegende Kontaktteil 302 sowohl durch die versetzte Anordnung des gegenüber der Ausnehmung 56 schmaleren Einführkanals 62 als auch durch die Wirkung des Federelements 60 an der Innenwandung anliegt, führt eine Querbelastung des Anschlusskontakts 300a entweder zu einer Erhöhung der Kontaktkraft F oder lässt diese praktisch unbeeinflusst.

Zur mechanischen Fixierung im Gehäuse 6 ist der Anschlusskontakt 300a mit Rastausnehmungen versehen, die mit entsprechend im Gehäuse 6 angeordneten Rastnasen in Eingriff stehen.

In ähnlicher Weise erfolgt die Kontaktierung der Schutzdiode 28 und der Wicklung der Spule 26 an den baugleichen gehäuseexternen Anschlusskontakt 200a mit einem ebenfalls in einer gleichgeformten Ausnehmung 56 gelagerten Kontaktelement 66. Das Kontaktelement 66 ist dabei im Bereich der Ausnehmung 56 baugleich mit dem freien Ende 52 des Schaltkontakts 2a und ist in gleicher Weise mit dem innenliegenden Kontaktteil 202 elektrisch kontaktiert. Mit seinem freien Ende 67 ist das Kontaktelement 66 an einen Anschlusskontakt der Schutzdiode 28 angeschlossen. In diesem Ausführungsbeispiel ist die Schutzdiode 28 parallel zur Wicklung der Spule 26 geschaltet. Die Anschlussenden der Spulenwicklung sind hierzu an einen Anschlusslappen des Kontaktelementes 66 bzw. an den anderen Anschlusskontakt der Schutzdiode 28 kontaktiert.

In der Figur ist außerdem noch veranschaulicht, dass als gehäuseexterne Anschlusskontakte unterschiedliche Ausführungsformen A,B,C vorgesehen sein können, deren außenliegende Kontaktteile 204,304 unterschiedlich gestaltet sind, und die nachträglich, das heißt erst vom Anwender entsprechend seinen Erfordernissen in den ohne Anschlusskontakte ausgelieferten Simulationsschalter eingesteckt werden.

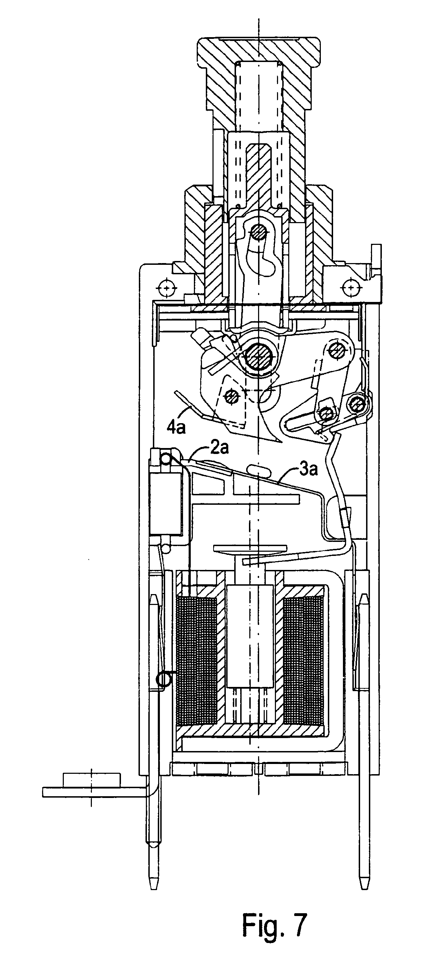

Fig. 7 zeigt den Simulationsschalter gemäß Fig. 6 im ausgelösten Zustand, wobei in diesem Ausführungsbeispiel der bewegliche Schaltkontakt 4a durch eine Bewegung nach oben weggeschwenkt wird.

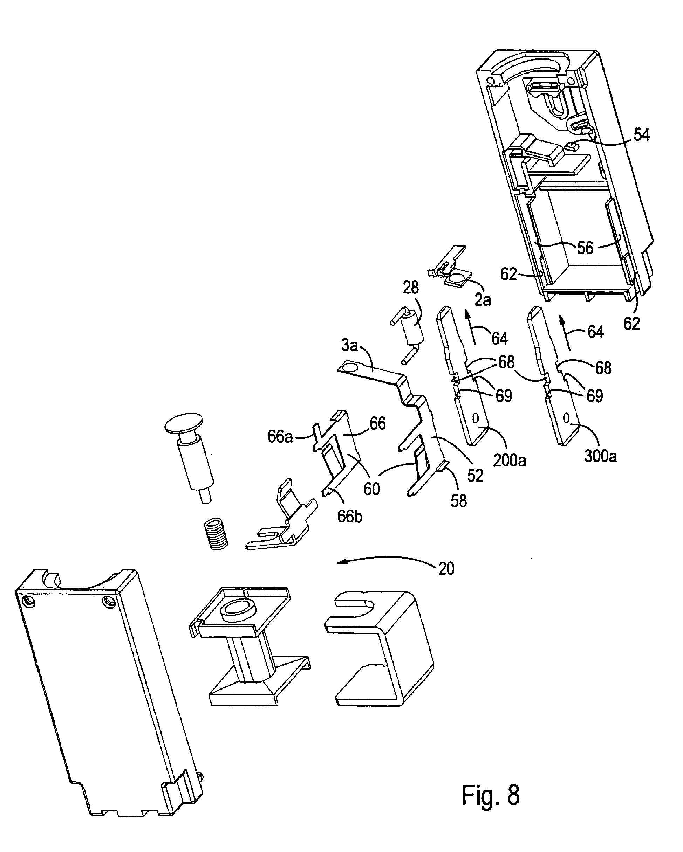

In der Explosionsdarstellung gemäß Fig. 8 sind der zweite feststehende Schaltkontakt 3a und das über die Schutzdiode 28 an den ersten feststehenden Schaltkontakt 2a angeschlossene Kontaktelement 66 sowie das an ihnen jeweils einstückig angeformte Federelement 60 zu erkennen. Das Kontaktelement 66 ist mit einem Kontaktsteg 66a versehen, der mit einem Anschlusskontakt der Schutzdiode 28 verlötet wird. Ein weiterer Anschlusslappen 66b ist zum Verlöten mit dem Anschlusskontakt der Spulenwicklung vorgesehen.

Die gehäuseexternen Anschlusskontakte 200a,300a sind auf ihren Schmalseiten mit Rastausnehmungen 68 versehen, die mit entsprechenden Vorsprüngen (Rastnasen) im Gehäuse 6 verrasten und die Anschlusskontakte 302a,303a im Zusammenwirken mit Anschlagschultern 69 gegen eine Axialverschiebung sichern. Die von dem Federelement 60 jeweils ausgeübte Kontaktkraft F wirkt dabei quer zur Einführrichtung 64 und ist von der mechanischen Haltekraft entkoppelt.

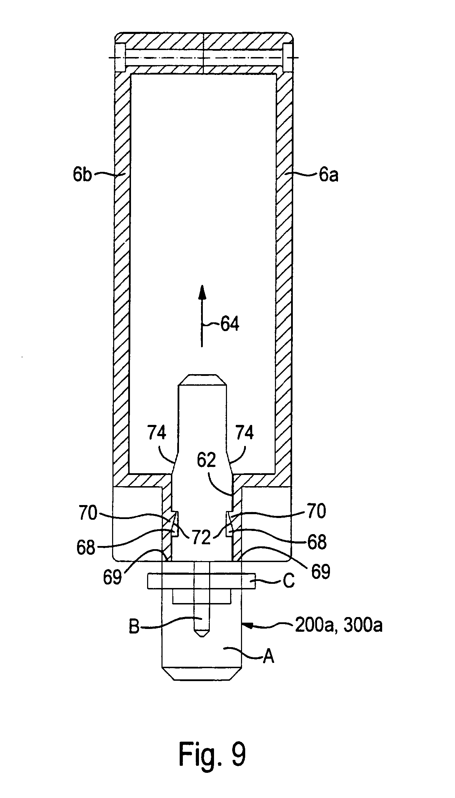

Gemäß Fig. 9 sind an den Seitenwänden des Einführkanals 62 Rastnasen 70 angeordnet, die in Einführrichtung 64 mit einer Auflaufschräge 72 versehen sind. Der Anschlusskontakt 200a (300a) ist in Einführrichtung 64 verjüngt und ebenfalls mit einer Schräge 74 versehen, die beim Einführen des Anschlusskontaktes 200a (300a) in den Einführkanal 62 auf die Auflaufschräge 72 aufgleitet und die Seitenwände des Einführkanals 62 auseinanderdrückt. Die Rasthaken 70 schnappen in Endposition des Anschlusskontaktes 200a, 300a in die Ausnehmungen 68 ein, so das ein Herausziehen oder Herausfallen des Anschlusskontaktes 200a,300a nicht mehr möglich ist. In dieser Position sitzt auch die Anschlagschulter 69 am Rand des Einführkanals 62 auf, so das der Anschlusskontakt 200a, 300a gegen ein axiales Verschieben in beiden Richtungen gesichert ist.

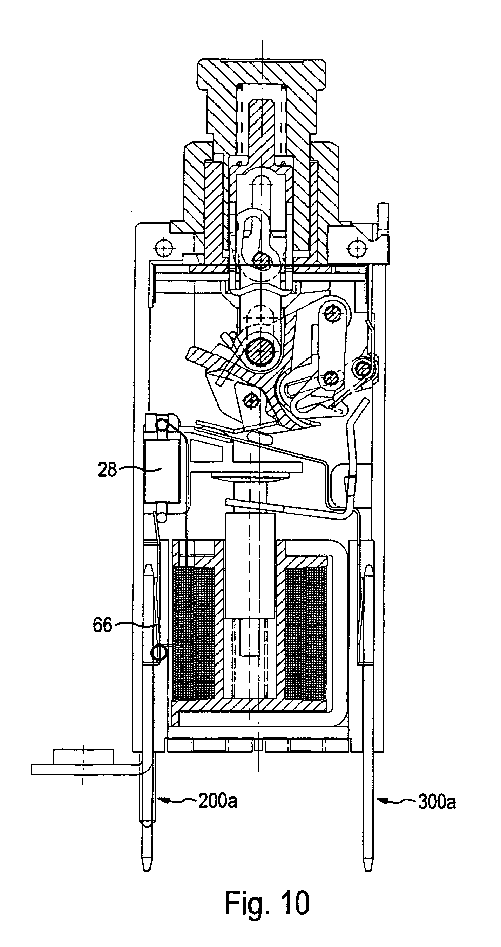

im Ausführungsbeispiel gemäß Fig. 10 ist bei einem Simulationsschalter mit steckbaren gehäuseexternen Anschlusskontakten 200a, 300a die Schutzdiode 28 in Serie zur Spulenwicklung geschaltet. Hierzu ist beim Kontaktelement 66 der Kontaktsteg 66a (Fig. 8) weggelassen, so dass dieses nur mit seinem Anschlusslappen an die Spulenwicklung angeschlossen ist.

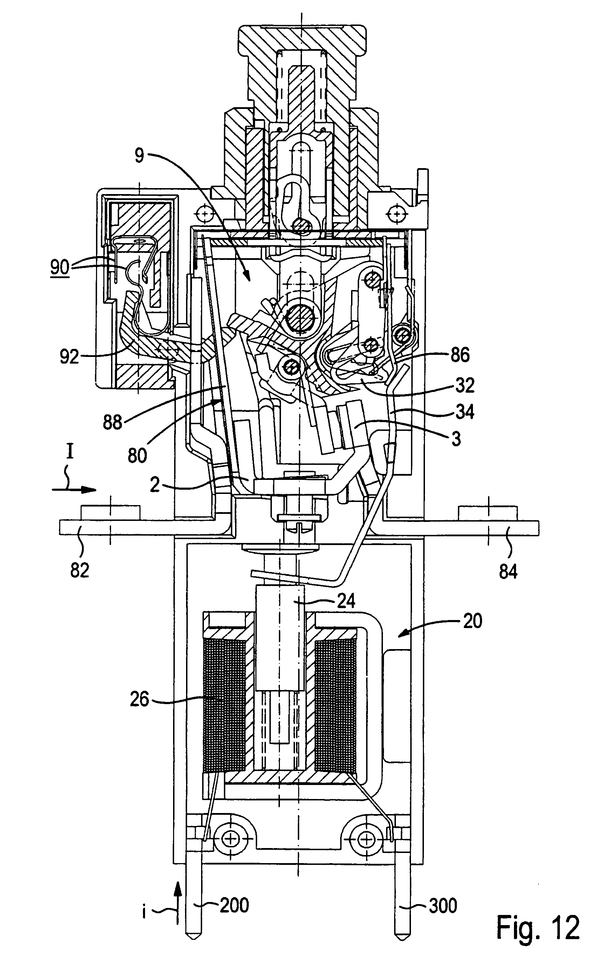

Gemäß Fig. 12 ist der Simulationsschalter sowohl mit einer elektromagnetischen Auslöseeinrichtung 20 als auch mit einer bimetallgesteuerten thermischen Überstromauslöseeinrichtung 80 versehen, wie sie beispielsweise in den DE-Gebrauchsmustem 89 04 065 und 89 04 064 offenbart ist. Elektromagnetische Auslöseeinrichtung 20 und thermische Überstromauslöseeinrichtung 80 sind elektrisch voneinander entkoppelt.

Der Simulationsschalter ist hierzu mit-zwei zusätzlichen Anschlusskontakten 82 und 84 (Fig. 12) versehen, an die die Schaltkontakte 2,3 angeschlossen sind. Die elektromagnetische Auslöseeinrichtung 20 ist dabei mechanisch in Serie zur thermischen Überstromauslöseeinrichtung 80 geschaltet, wobei zwischen dem am Zuganker 24 verankerten Auslösehebel 34 und dem Verrastungshebel 32 ein zweiter Auslösehebel 86 angeordnet ist, der an ein als thermisches Auslöseelement dienendes Bimetall 88 gekoppelt ist. In dieser Ausführungsform kann der Simulationsschalter als realer Überstromschutzschalter mit Femauslösung verwendet werden, d.h. die Auslösung erfolgt entweder über einen über die Anschlusskontakte 80,82 fließenden Überstrom I oder über einen zur Spule 26 fließenden Steuerstrom i.

Um den Schaltzustand des Simulationsschalters erfassen zu können, ist dieser mit einem zusätzlichen Signalkontakt 90 versehen, der durch einen in Wirkverbindung mit der Schaltmechanik 9 stehenden Signalkontakthebel 92 betätigt wird.

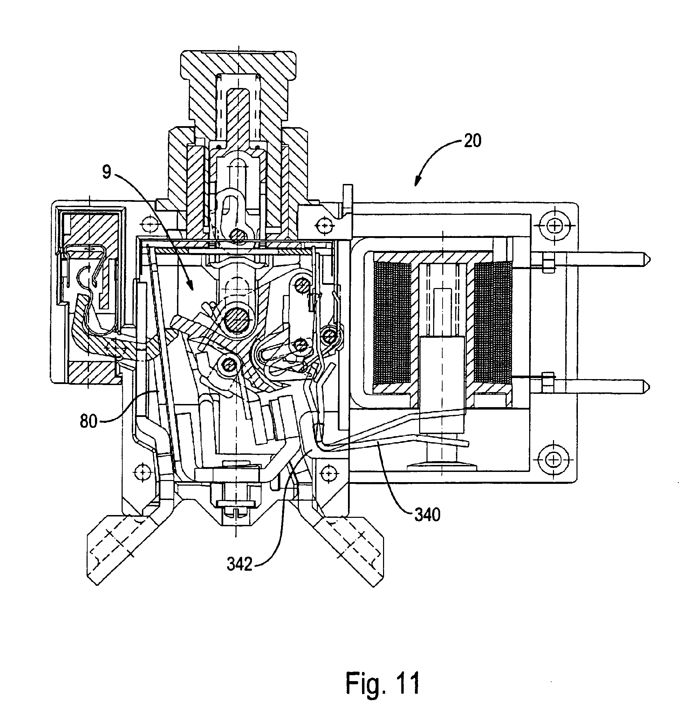

Im Ausführungsbeispiel gemäß Fig. 11 ist die elektromagnetische Auslöseeinrichtung 20 neben der Schaltmechanik 9 angeordnet. Die elektromagnetische Auslöseeinrichtung 20 ist hierzu an einen L-förmigen Auslösehebel 340 gekoppelt, der am Schnittpunkt seiner Schenkel schwenkbar in einer Lagermulde 342 gelagert ist. In der Figur ist dieser Auslösehebel 340 in seinen zwei Endpositionen dargestellt.

Eine solche Anordnung ist insbesondere dann von Vorteil, wenn die verfügbare Einbautiefe begrenzt ist und der Einbau eines Simulationsschalters, bei dem gemäß Fig. 1 bis 10 oder 12 die elektromagnetische Auslöseeinrichtung 20 unterhalb der Schaltmechanik 9 angeordnet ist, nicht möglich ist.

Die im Ausführungsbeispiel anhand eines Simulationsschalters mit einer zusätzlichen thermischen Überstromauslöseeinrichtung 80 dargestellte räumliche Anordnung der elektromagnetischen Auslöseeinrichtung 20 kann dabei grundsätzlich auch bei einem Simulationsschalter ohne thermische Überstromauslöseeinrichtung 80 Verwendung finden.

### Bezugszeichenliste

- 2,2a: erster feststehender Schaltkontakt
- 3,3a: zweiter feststehender Schaltkontakt
- 4,4a: beweglicher Schaltkontakt
- 6: Gehäuse
- 6,6a: Gehäusehälfte
- 8: Schwenkachse
- 9: Schaltmechanik
- 10: Betätigungselement
- 12: Verklinkung
- 13: Riegel
- 14: erste Feder
- 16: zweite Feder
- 20: elektromagnetische Auslöseeinrichtung
- 22: Relais
- 24: Zuganker
- 26: Spule
- 28: Schutzdiode
- 32: Verrastungshebel
- 34,340: Auslösehebel
- 34a,b: freies Ende
- 38: Aussparung
- 40: Lagerzapfen
- 42: Lageraugen
- 46: Druckfeder
- 47: Spulenträger
- 48: Magnetjoch
- 50: Führungsbohrung
- 52: freies Ende
- 54: Stützzapfen
- 56: Ausnehmung
- 58: Stützfuß
- 60: Federelement
- 62: Einführkanal
- 64: Einsteckrichtung
- 66: Kontaktelement
- 66a: Kontaktsteg
- 66b: Kontaktlappen
- 68: Rastausnehmung
- 69: Anschlagschalter
- 70: Rasthaken
- 72: Auflaufschräge
- 74: Schräge
- 80: thermische Überstromauslöseeinrichtung
- 82,84: Anschlusskontakt
- 86: zweiter Auslösehebel
- 88: Bimetall
- 90: Signalkontakt
- 92: Signalkontakthebel
- 101: Druckknopf
- 102: Führungshülse
- 103: Stirnfläche
- 104: Vertiefung
- 120,130, 130a,140: Kontaktstücke
- 200,300, 200a,300a: gehäuseexterner Anschlusskontakt
- 202,302: innenliegendes Kontaktteil
- 204,304: außenliegendes Kontaktteil
- 342: Lagermulde
- F: Kontaktkraft
- i: Steuerstrom
- l: Überstrom

## Patentansprüche

1. Simulationsschalter zum Einbau in einen Flugsimulator und Simulieren eines mittels eines Betätigungselementes (10) manuell betätigbaren Überstromschutzschalters, der zum Einsatz in einem Flugzeug vorgesehen ist und eine durch eine bimetall-basiche Auslöseeinrichtung auslosbare Schaltmechanik aufweist, wobei der Simulationsschalter eine der Schaltmechanik des Überstromschutzschalters baugleiche Schaltmechanik (9) zum Öffnen und Schließen eines Schaltkontaktes (2,3,4;2a,3a,4a) sowie eine elektromagnetische Auslöseeinrichtung (20) zum Auslösen des geschlossenen Schaltkontaktes (2,3,4;2a,3a,4a) und Entriegeln des Betätigungselements (10) mittels eines Steuerstromes (i) aufweist.

2. Simulationsschalter nach Anspruch 1, bei dem die elektromagnetische Auslöseeinrichtung (20) in Serie mit der durch die Schaltkontakte (2,3,4;2a,3a,4a) gebildeten Schaltstrecke geschaltet ist.

3. Simulationsschalter nach Anspruch 1 oder 2, bei dem die elektromagnetische Auslöseeinrichtung (20) ein Relais (22) mit einem Zuganker (24) zum Entriegeln einer in Schließstellung wirksamen Verklinkung (12) zumindest eines der Schaltkontakte (4;4a) umfasst.

4. Simulationsschalter nach Anspruch 3, bei dem die Spule (26) des Relais in Serie zur Schaltstrecke geschaltet ist.

5. Slmulationsschalter nach Anspruch 3 oder 4, bei dem der Zuganker (24) Ober einen schwenkbaren Entriegelungshebel (34) mit der Verklinkung (32) in Eingriff steht.

6. Simulationsschalter nach einem der Ansprüche 2 bis 5, mit einer in Serie oder parallel zur Wicklung der Spule (26) des Relais (22) geschalteten Schutzdiode (28).

7. Simulationsschalter nach einem der vorhergehenden Ansprüche, mit zumindest einem elektrischen gehäuseexternen Anschlusskontakt (200a,300a), der mit einem innenliegenden Kontaktteil (202,302) in das fertig montierte Gehäuse (6) einführbar und dort im eingeführten Zustand fixiert ist und über das innenliegende Kontaktteil (202,302) in elektrischem Kontakt mit einem gehäuseinternen Anschlusskontakt (52,66) steht.

8. Simulationsschalter nach Anspruch 7, bei dem der elektrische Kontakt zwischen dem gehäuseinternen Anschlusskontakt (52,66) und dem gehäuseexternen Anschlusskontakt (200a,300a) von der mechanischen Fixierung des gehäuseexternen Anschlusskontaktes (200a,300a) im Gehäuse (6) unabhängig ist.

9. Simulationsschalter nach Anspruch 7 oder 8, bei dem zum Fixieren des gehäuseexternen Anschlusskontaktes (200a,300a) im Gehäuse (6) eine Rastverbindung vorgesehen ist.

10. Simulationsschalter nach einem der Ansprüche 7 bis 9, bei dem der gehäuseinterne Anschlusskontakt (52,66) durch ein-Federelement (60) gebildet ist.

11. Simulationsschalter nach einem der Ansprüche 7 bis 10, bei dem die Kontaktkraft (F) quer zur Einführrichtung (64) wirkt.

12. Simulationsschalter nach einem der Ansprüche 1 bis 3 oder 5 bis 11, bei dem zusätzlich zu der elektromagnetischen Auslöseeinrichtung (20) eine thermische Überstromauslöseeinrichtung (80) zum Auslösen des geschlossenen Schaltkontakts (2,3) mit einem über ihn fließenden Überstrom (I) vorgesehen ist.

13. Simulationsschalter nach Anspruch 12, bei dem den Schaltkontakten (2,3) Anschlußkontakte (80 bzw. 82) zugeordnet sind, die elektrisch von den Anschlußkontakten (200a,300a) der elektromagnetischen Auslöseeinrichtung (20) getrennt sind.

14. Verwendung eines Simulationsschalter nach einem der Ansprüche 1 bis 13 in einem Flugsimulator.

## Claims

1. Simulation switch for installation in a flight simulator and for simulation for an overcurrent circuit breaker which can be operated manually by means of an operating element (10), is intended for use in an aircraft and has a switching mechanism which can be tripped by means of a tripping device which is based on a bimetallic strip, with the simulation switch having a switching mechanism (9), which is physically the same as the switching mechanism of the overcurrent circuit breaker, for opening and closing of a switching contact (2, 3, 4; 2a, 3a, 4a) as well as an electromagnetic tripping device (20) for tripping of the closed switching contact (2, 3, 4; 2a, 3a, 4a) and for unlocking of the operating element (10), by means of a control current (i).

2. Simulation switch according to Claim 1, in which the electromagnetic tripping device (20) is connected in series with the switching path formed by the switching contacts (2, 3, 4; 2a, 3a, 4a).

3. Simulation switch according to Claim 1 or 2, in which the electromagnetic tripping device (20) comprises a relay (22) with a tie rod (24) for unlocking of a catch (12), which acts in the closed position, for at least one of the switching contacts (4; 4a).

4. Simulation switch according to Claim 3, in which the coil (26) of the relay is connected in series with the switching path.

5. Simulation switch according to Claim 3 or 4, in which the tie rod (24) engages with the catch (32) via an unlocking lever (34) which can pivot.

6. Simulation switch according to one of Claims 2 to 5, having a protective diode (28) which is connected in series or in parallel with the winding of the coil (26) of the relay (22).

7. Simulation switch according to one of the preceding claims, having at least one electrical connecting contact (200a, 300a) outside the housing, an inner contact part (202, 302) of which can be inserted into the completely assembled housing (6) where it is fixed in the inserted state, with the connecting contact (200a, 300a) making electrical contact via the inner contact part (202, 302) with a connecting contact (52, 66) inside the housing.

8. Simulation switch according to Claim 7, in which the electrical contact between the connecting contact (52, 66) inside the housing and the connecting contact (200a, 300a) external to the housing is independent of the mechanical fixing of the connecting contact (200a, 300a) which is external to the housing in the housing (6).

9. Simulation switch according to Claim 7 or 8, in which a latching connection is provided to fix the connecting contact (200a, 300a) which is external to the housing in the housing (6).

10. Simulation switch according to one of Claims 7 to 9, in which the connecting contact (52, 66) inside the housing is formed by a spring element (60).

11. Simulation switch according to one of Claims 7 to 10, in which the contact force (F) acts transversely with respect to the insertion direction (64).

12. Simulation switch according to one of Claims 1 to 3 or 5 to 11, in which, in addition to the electromagnetic tripping device (20), a thermal overcurrent tripping device (80) is provided in order to trip the closed switching contact (2, 3) by means of an overcurrent (I) flowing through it.

13. Simulation switch according to Claim 12, in which the switching contacts (2, 3) have associated respective connecting contacts (80 and 82) which are electrically isolated from the connecting contacts (200a, 300a) of the electromagnetic tripping device (20).

14. Use of a simulation switch according to one of Claims 1 to 13 in a flight simulator.

## Revendications

1. Commutateur de simulation destiné à être intégré dans un simulateur de vol et à simuler un disjoncteur de protection contre les surintensités de courant actionnable manuellement au moyen d'un élément de manoeuvre (10) qui est prévu pour l'utilisation dans un avion et qui comporte un mécanisme de commutation pouvant être déclenché par un dispositif de déclenchement basé sur un bilame, le commutateur de simulation comportant un mécanisme de commutation (9) de conception identique à celle du mécanisme de commutation du disjoncteur de protection contre les surintensités pour ouvrir et pour fermer un contact de commutation (2, 3, 4 ; 2a, 3a, 4a), ainsi qu'un dispositif de déclenchement électromagnétique (20) pour le déclenchement du contact de commutation (2, 3, 4 ; 2a, 3a, 4a) fermé et pour le déverrouillage de l'élément de manoeuvre (10) au moyen d'un courant de commande (i).

2. Commutateur de simulation selon la revendication 1, dans lequel le dispositif de déclenchement électromagnétique (20) est monté en série avec la section de commutation formée par les contacts de commutation (2, 3, 4: 2a, 3a, 4a).

3. Commutateur de simulation selon la revendication 1 ou 2, dans lequel le dispositif de déclenchement électromagnétique (20) comprend un relais (22) ayant un tirant (24) pour déverrouiller un encliquetage (12) actif en position de fermeture d'au moins l'un des contacts de commutation (4 ; 4a).

4. Commutateur de simulation selon la revendication 3, dans lequel la bobine (26) du relais est montée en série par rapport au trajet de commutation.

5. Commutateur de simulation selon la revendication 3 ou 4, dans lequel le tirant (24) est en prise avec l'encliquetage (32), par l'intermédiaire d'un levier de déverrouillage (34) pivotant.

6. Commutateur de simulation selon l'une quelconque des revendications 2 à 5, ayant une diode de protection (28), montée en série ou en parallèle à l'enroulement de la bobine (26) du relais (22).

7. Commutateur de simulation selon l'une quelconque des revendications précédentes, avec au moins un contact de borne électrique (200a, 300a) extérieur au boîtier que l'on peut introduire par un élément de borne extérieur (202, 302) dans le boîtier (6) fini de montage et qui y est fixé à l'état introduit et qui par l'intermédiaire de l'élément de contact intérieur (202, 302) est en contact électrique avec un contact de borne (52, 66) intérieur au boîtier.

8. Commutateur de simulation selon la revendication 7, dans lequel le contact électrique entre le contact de borne (52, 66) intérieur au boîtier et le contact de borne (200a, 300a) extérieur au boîtier est indépendant de la fixation mécanique du contact de borne (200a, 300a) extérieur au boîtier dans le boîtier (6).

9. Commutateur de simulation selon la revendication 7 ou 8, dans lequel, pour fixer le contact de borne (200a, 300a) extérieur au boîtier, une liaison par encliquetage est prévue dans le boîtier (6).

10. Commutateur de simulation selon l'une quelconque des revendications 7 à 9, sur lequel le contact (52, 66) intérieur au boîtier est formé par un élément à ressort (60).

11. Commutateur de simulation selon l'une quelconque des revendications 7 à 10, sur lequel la force du contact (F) agit transversalement au sens d'introduction (64).

12. Commutateur de simulation selon l'une quelconque des revendications 1 à 3 ou 5 à 11, dans lequel, en supplément du dispositif de déclenchement électromagnétique (20), il est prévu un dispositif de déclenchement de surintensité thermique (80), pour déclencher le contact de commutation fermé (2, 3), par une surintensité de courant (I) qui y passe.

13. Commutateur de simulation, selon la revendication 12, dans lequel des contacts de borne (80,82) respectivement, qui sont isolés du point de vue électrique des contacts de borne (200a, 300a) du dispositif de déclenchement électromagnétique (20), sont associés aux contacts de commutation (2, 3).

14. Utilisation d'un commutateur de simulation selon l'une quelconque des revendications 1 à 13 dans un simulateur de vol.
